# EUROPEAN PATENT APPLICATION

(11) **EP 1 762 755 A2**
(43) Date of publication of application: **14.03.2007**
(21) Application number: 06076457.8
(22) Date of filing: 21.07.2006
(51) Int. Cl.: F16H 63/20, F16H 63/32

(54) **Shift mechanism for a transmission**

(30) Priority: 08.09.2005 JP 2005260200
(71) Applicant: AISIN AI Co., Ltd., Nishio-shi, Aichi-ken (JP)
(72) Inventor: Yamamoto, Norimasa, Nishio-shi, Aichi-ken (JP); Sasaki, Kan, Nishio-shi, Aichi-ken (JP); Horiuchi, Ichiro, Nishio-shi, Aichi-ken (JP)
(74) Representative: Serjeants

(57) **Abstract**

A shift mechanism for a transmission includes: an inner lever (2) operated in response to an operation force; a shift head (3) configured to engage with the inner lever (2) and to move in a shift direction; a shift fork (4) having the shift head (3); a shift fork shaft (5) equipped with the shift fork (4) and supported to be movable in the shift direction; a positioning mechanism (6) positioning the shift fork shaft (5) that is movable in the shift direction; a case (7) housing the shift mechanism therein; and at least one stopper (8a/8b) arranged to face the shift head (3) along the shift direction and configured to impact with the shift head (3) when the shift fork shaft (5) is moved to a predetermined shift position along the shift direction.

## Description

### FIELD OF THE INVENTION

This invention generally relates to a shift mechanism for a transmission. More particularly, this invention pertains to a shift mechanism for a manual transmission.

### BACKGROUND

An undesirable mechanical force may be on occasions created inside a manual transmission, for example due to an axial eccentric amount, i.e., a postural sway, of a sleeve contained in a synchronizing mechanism. Because the sleeve is provided with a shift fork thereon, the undesirable mechanical force is transmitted via a shift control system for the transmission, and acts to cause an occurrence of an abnormal noise and/or vibration of a shift cable and/or a shift lever. This undesirable mechanical force is hereinafter referred to as a compulsive force. The compulsive force can include some other types of mechanical force as well.

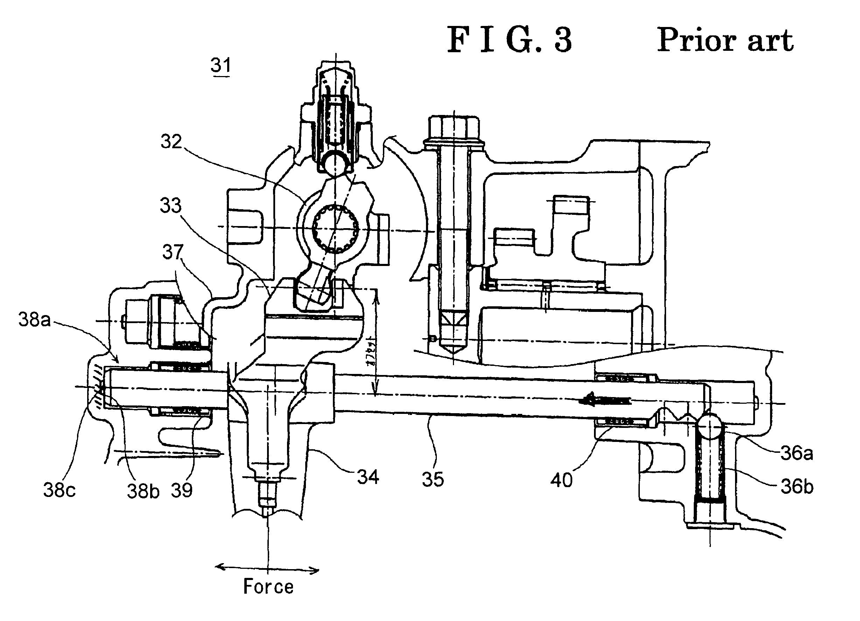

As can be seen from Fig. 3, a conventional shift mechanism for a manual transmission includes: an inner lever 32 which receives a shift or select operation force from a shift cable or a shift lever and pivotably rotates; a shift head 33 which is engaged with the inner lever 32 pivotably rotated and is shifted or moved in a shift operation; a shift fork 34 formed with the shift head 33; a shift fork shaft 35 which is fixed with the shift fork 34 and is shifted or moved in the shift direction in response to the movement of the shift head 33; a lock ball 36a which is provided at the other side of the shift fork shaft 35 and slidably comes in contact with the shift fork shaft 35; a spring 36b which exerts a spring force for the purpose of positioning the shift fork shaft 35 via the lock ball 36a; a case 37 which houses the shift mechanism 31 therein; and a bore 38a which is formed at the case 37 and houses one end portion of the shift fork shaft 35. The bore 38a has a bottom surface 38b that faces the one end of the shift fork shaft 35. This bottom surface 38b acts as a stopper, which can come in contact with the one end of the shift fork shaft 35 when the shift fork shaft 35 is subjected with a compulsive force acting towards the other side of the shift fork shaft 35.

However, in conventional shift mechanisms for manual transmissions as described above, there is a possibility that, when the compulsive force is transmitted to the shift fork 34, an abnormal noise or an undesirable vibration may be created at a shift cable or a shift lever. More specifically, when the compulsive force is transmitted to the shift fork 34, the shift fork 34 and/or the shift fork shaft 35 may be distorted, in addition or alternatively, a supporting portion of the shift fork shaft 35, e.g., first and second bearings 39 and 40, loosens. Such distortion and/or mechanical looseness may lead to a displacement of the shift fork shaft 35 with a fulcrum 38c on the one end of the shift fork shaft 35, the one end which has been pushed to the case 37. Accordingly, the shift head 33, which has been shifted or positioned at a neutral (offset), is caused to move. The movement of the shift head 33 is transmitted to the inner lever 32 and further to the shift cable or the shift lever. As a result, there may be a drawback that an abnormal noise or an undesirable vibration may be created at the shift cable or the shift lever.

The present invention has been made in view of the above circumstances, and provides a transmission, especially a shift mechanism for a transmission, which can restrain an occurrence of an abnormal noise and/or a vibration due to a transmitting of a compulsive force generated inside of the transmission.

### SUMMARY OF THE INVENTION

According to an aspect of the present invention, a shift mechanism for a transmission includes: an inner lever operated in response to an operation force; a shift head configured to engage with the inner lever and to move in a shift direction; a shift fork having the shift head; a shift fork shaft equipped with the shift fork and supported to be movable in the shift direction; a positioning mechanism positioning the shift fork shaft that is movable in the shift direction; a case housing the shift mechanism therein; and at least one stopper arranged to face the shift head along the shift direction and configured to impact with the shift head when the shift fork shaft is moved to a predetermined shift position along the shift direction.

### BRIEF DESCRIPTION OF THE DRAWINGS

The foregoing and additional features and characteristics of the present invention will become more apparent from the following detailed description considered with reference to the accompanying drawings, wherein:

Fig. 1 is a view illustrating a shift mechanism for a manual transmission according to a first embodiment of the present invention;

Fig. 2 is a view illustrating a shift mechanism for a manual transmission according to a second embodiment of the present invention; and

Fig. 3 is a view illustrating a conventional shift mechanism for a manual transmission.

### DETAILED DESCRIPTION

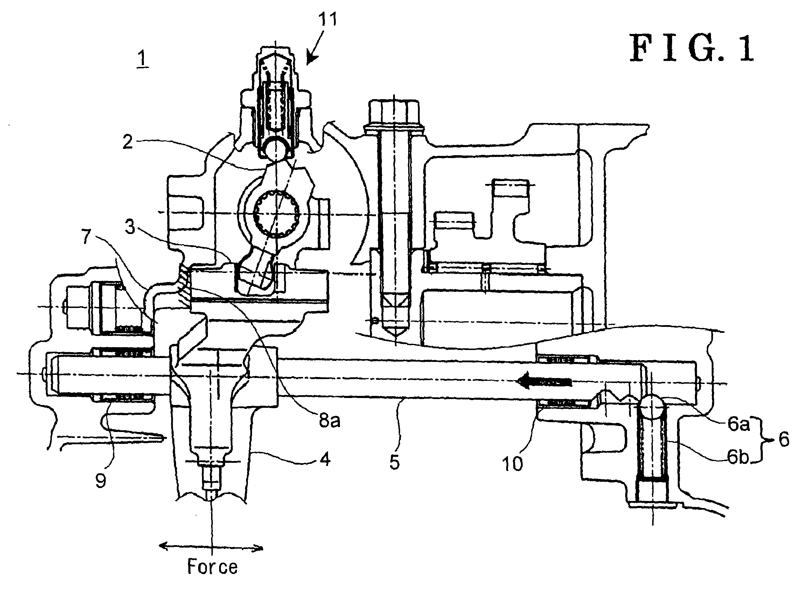

A first embodiment of the present invention is described herein with reference to Fig. 1.

As can be seen from Fig. 1, a shift mechanism 1 for a transmission according to the first embodiment of the present invention includes: an inner lever 2 which receives a shift or select operation force from a shift cable or a shift lever and pivotably rotates; a shift head 3 which is adapted to be engaged with the inner lever 2 and is shifted or moved in a shift direction; a shift fork 4 formed with the shift head 3; a shift fork shaft 5 which is associated with the shift fork 4 and is supported so as to move in the shift direction; a lock ball mechanism (a positioning mechanism) 6 which exerts a spring force for operatively positioning the shift fork shaft 5; a case 7 which houses the shift mechanism 1 therein; and a stopper 8a (a first stopper) which is arranged to face the shift head 3 in the shift direction and is configured to come in contact with the shift head 3 when the shift fork shaft 5 is shifted to a predetermined shift position along the shift direction. The stopper 8a is illustrated with hatchings in Fig. 1.

The stopper 8a is arranged to face one side of the shift head 3 in the shift direction, as is obvious from Fig. 1. In other words, the stopper 8a is arranged at a side towards which the inner lever 2 is rotated so that the stopper 8a is subjected with a load in response to a rotation of the inner lever 2. The stopper 8a can be an inner wall surface of the case 7 and alternatively can be a separate member fixed to the inner wall surface.

The shift mechanism 1 further includes a first bearing 9 and a second bearing 10, both of which serve as shift fork shaft supporting portions and support the one end portion, and the other end portion of the shift fork shaft 5, in such a manner that the shift fork shaft 5 is moved in the shift direction.

The lock ball mechanism 6 includes: a lock ball 6a, which is arranged at the other side of the shift fork shaft 5 and is configured to slidably come in contact with the shift fork shaft 5; and a spring 6b which exerts a spring force for the purpose of positioning the shift fork shaft 5 via the lock ball 6a.

Provided is another lock ball mechanism for the inner lever 2, as illustrated in Fig. 1, by which the inner lever 2 can be rotated between one shift position and the other shift position via a neutral position therebetween.

The inner lever 2 is connected to a shift cable (not illustrated) or a shift lever and inputted with a shift or select operation force therefrom.

The shift fork 4 is operatively associated with or operatively mounted on a non-illustrated shift mechanism, e.g., a synchromesh mechanism of a biaxial type gear transmission, and is configured to move or shift a sleeve of the synchromesh mechanism within an axial range between one shift position and the other shift position via a neutral position.

Described below is an operation of a shift mechanism applied to the transmission according to the first embodiment of the present invention.

As we can see from Fig. 1, when the shift head 3, the shift fork 4 and the shift fork shaft 5 move axially in response to a rotation of the inner lever 2 to the one shift position, one side, or one side surface, of the shift head 3 is subjected with a shift load of the inner lever 2 and impacts with the stopper 8a. Therefore, even if the compulsive force is inputted to the shift fork 4, the shift head 3, which has been fixedly supported between the inner lever 2 and the stopper 8a so as not to be displaced, does not allow the vibration or looseness, which is generated due to the compulsive force, to be transmitted to the inner lever 2. As a result, it is possible to restrain or preclude an occurrence of an abnormal noise or vibration at the shift cable and/or shift lever which are each connected to the inner lever 2.

Described below is a shift mechanism for a transmission according to a second embodiment of the present invention. The shift mechanism according to the second embodiment possesses the same general construction as the one defined in the first embodiment, and so a detailed description of such shift mechanism is not repeated here.

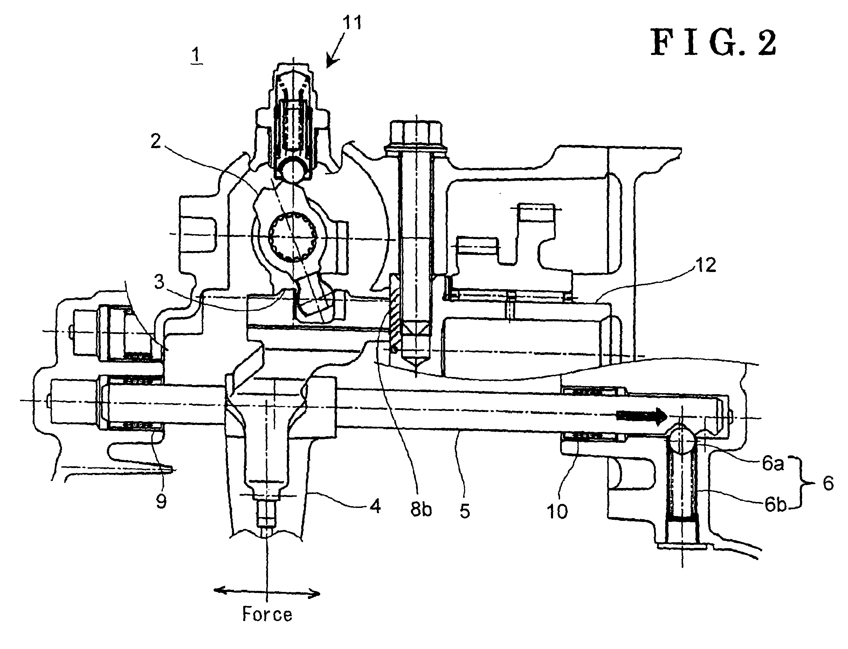

Turning now to Fig. 2, a stopper 8b (a second stopper) is arranged to face the other surface of the shift head 3 in the shift direction. The stopper 8b is illustrated with hatchings in Fig. 2. The stopper 8b herein can be a separated member fixed to the case 7, e.g., one side surface of a reverse movement idling shaft 12.

Described below is an operation of a shift mechanism applied to the transmission according to the second embodiment of the present invention.

As we can see from Fig. 2, when the shift head 3, the shift fork 4 and the shift fork shaft 5 move axially in response to a rotation of the inner lever 2 to the other shift position, the other side, or the other side surface of the shift head 3 is subjected with a shift load of the inner lever 2 and impacts with the stopper 8b. Therefore, even if the compulsive force is inputted to the shift fork 4, the shift head 3, which has been fixedly supported between the inner lever 2 and the stopper 8b so as not to be displaced, does not allow the vibration or looseness, which is generated due to the compulsive force, to be transmitted to the inner lever 2. As a result, it is possible to restrain or preclude an occurrence of an abnormal noise or vibration of the shift cable and/or shift lever, which are each connected to the inner lever 2.

As previously described, it is found to be preferable that the shift mechanism 1 includes the stopper 8b in Fig. 2 together with the stopper 8a in Fig. 1 in the transmission, i.e., includes a stopper at one side of the inner lever 3 and another stopper at the other side thereof.

Further, it is apparent that the invention can be preferably applied to a transmission apparatus especially to a transmission apparatus in which a shift mechanism operates a biaxial type gear transmission via a synchromesh mechanism, and can be further applied to another type of transmission such as an automated manual transmission.

As described above, according to the first and second embodiments, when a shift head or a shift fork shaft has been moved to a predetermined shift position, the shift head has been pushed to a stopper. Therefore, at this point, even if a compulsive force is inputted to the shift fork shaft, it is possible to prevent looseness of the shift head. Accordingly, a vibration is prevented from being transmitted to an inner lever engaged with the shift head. Further, the vibration is prevented from being transmitted to a member at an operation side, e.g., a shift cable or a shift lever which operates the inner lever. As a result, it is possible to avoid an occurrence of abnormal noise or vibration at the shift cable or the shift lever.

The principles, the preferred embodiments and mode of operation of the present invention have been described in the foregoing specification. However, the invention, which is intended to be protected, is not to be construed as limited to the particular embodiment disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents that fall within the spirit and scope of the present invention as defined in the claims, be embraced thereby.

## Claims

1. A shift mechanism for a transmission comprising:
an inner lever (2) operated in response to an operation force;
a shift head (3) configured to engage with the inner lever (2) and to move in a shift direction; a shift fork (4) having the shift head (3);
a shift fork shaft (5) equipped with the shift fork (4) and supported to be movable in the shift direction;
a positioning mechanism (6) positioning the shift fork shaft (5) that is movable in the shift direction;
a case (7) housing the shift mechanism therein; and
at least one stopper (8a/8b) arranged to face the shift head (3) along the shift direction and configured to impact with the shift head (3) when the shift fork shaft (5) is moved to a predetermined shift position along the shift direction.

2. A shift mechanism for a transmission according to claim 1, wherein the at least one stopper (8a/8b) includes a first stopper (8a) and a second stopper (8b), and the first stopper (8a) is arranged to face one side of the shift head (3) and the second stopper (8b) is arranged to face an other side of the shift head (3).

3. A shift mechanism for a transmission according to claim 1, wherein the stopper (8a/8b) is positioned in a loading direction of the inner lever (2).

4. A shift mechanism for a transmission according to claim 2, wherein the first stopper (8a) is positioned at the one side of the shift head (3) along a loading direction of the inner lever (2) and the second stopper (8b) is positioned at the other side of the shift head (3) along the loading direction of the inner lever (2).

5. A shift mechanism for a transmission according to claim 1, wherein the stopper (8a/8b) is an internal wall of the case or a separated member fixed to an internal wall of the case (7).

6. A shift mechanism for a transmission according to claim 2, wherein the first stopper (8a) and the second stopper (8b) are portions of an internal wall of the case (7) or separated members fixed to the internal wall of the case (7), respectively.

7. A shift mechanism for a transmission according to claim 1, wherein the stopper (8a/8b) is one side of a reverse movement idling shaft (12).

8. A shift mechanism for a transmission according to claim 1, wherein the positioning mechanism (6) positions the shift fork shaft (5) by use of an elastic force.

9. A shift mechanism for a transmission according to claim 12, wherein the positioning mechanism (6) includes a ball (6a) and a spring (6b) which are configured to position the shift fork shaft (5).

10. A shift mechanism for a transmission according to claim 1, wherein the transmission is one of a manual transmission, a biaxial type gear transmission and an automated manual transmission.
